# EUROPEAN PATENT APPLICATION

(11) **EP 2 579 654 A1**
(43) Date of publication of application: **10.04.2013**
(21) Application number: 12006965.3
(22) Date of filing: 08.10.2012
(51) Int. Cl.: H04W 52/02, H04L 12/40, H04L 12/12

(54) **Control of energy efficiency above PMD interface**

(30) Priority: 07.10.2011 US 201161544488 P; 22.03.2012 US 201213427405
(71) Applicant: Broadcom Corporation, Irvine, CA 92617 (US)
(72) Inventor: Diab, Wael, San Francisco CA 94109 (US)
(74) Representative: Jehle, Volker Armin

(57) **Abstract**

Various embodiments are provided for control of energy efficient operation of a networked device. In one embodiment, among others, a method includes determining that transmissions to a network device will be reduced for a period of time and transmitting a code or signaling to the network device that indicates a low power state for a subsystem above a physical layer of the network device without a reduction in physical layer activity. In another embodiment, a method includes obtaining a code or signaling defining a low power state and initiating the low power state in response to the transmitted code or signaling. In another embodiment, a method includes obtaining a code or signaling defining a wakeup state allowing a subsystem above a physical layer to enter a low power state without idling the entire physical layer and initiating the wakeup state for the physical layer in response to the transmitted code.

## Description

### CROSS REFERENCE TO RELATED APPLICATIONS

This application claims priority to copending U.S. provisional application entitled "CONTROL OF ENERGY EFFICIENCY ABOVE PMD INTERFACE" having serial no. 61/544,488, filed October 7, 2011, the entirety of which is hereby incorporated by reference.

### BACKGROUND

Communication networks such as Ethernet networks are becoming increasingly popular means of exchanging data for a variety of applications. Broadband connectivity including internet, cable, and voice over internet services offered by service providers has led to increased traffic and, more recently, migration to Ethernet networking. The IEEE standard 802.3az-2010, also known as Energy Efficient Ethernet (EEE), is targeted at saving energy in Ethernet networks for a select group of physical layers (PHY) by powering down the interface to a lower power mode when idle. In contrast, legacy Ethernet interfaces have an active idle state with the bulk of the circuitry remaining powered up, independent of data transmission.

### BRIEF SUMMARY OF THE INVENTION

According to an aspect, a method is provided for controlling energy efficient operation of a receiving network device, comprising:
determining that transmissions to the receiving network device will be reduced for a period of time; and
transmitting a code to the receiving network device over a network link, the code defining a low power state for a subsystem above a physical layer of the receiving network device without a reduction in physical layer activity.

Advantageously, the network link is an Ethernet link.

Advantageously, the low power state is an Energy Efficient Ethernet (EEE) power management function implemented by the subsystem.

Advantageously, the low power state is a non-EEE power management function implemented by the subsystem.

Advantageously, the code defines a level of activity for the low power state.

Advantageously, the level of activity is lower than a normal bandwidth.

Advantageously, the code defines a period of time to maintain the low power state.

Advantageously, the period of time to maintain the low power state is a predefined period of time.

Advantageously, the period of time to maintain the low power state is based upon the period of time that transmissions to the receiving network device will be reduced.

Advantageously, the method further comprises:
determining that transmissions to a plurality of receiving network devices will be reduced for at least a portion of the period of time; and
transmitting code to the each of the plurality of receiving network devices, the code defining a low power state for a subsystem above the physical layer of the receiving network device without a reduction in physical layer activity, wherein the code includes an identification sequence identifying a corresponding one of the plurality of receiving network devices.

Advantageously, the identification sequence identifies a subgroup of the plurality of receiving network devices.

According to an aspect, a method is provided for controlling energy efficient operation of a receiving network device, comprising:
obtaining, from a transmitting network device, a code defining a low power state for a subsystem above a physical layer of the receiving network device without a reduction in physical layer activity; and
initiating the low power state for the subsystem in response to the transmitted code.

Advantageously, the network link is an Ethernet link.

Advantageously, the low power state is a sleep mode with no activity.

Advantageously, the code defines a level of activity for the low power state.

Advantageously, the code defines a low power state for a plurality of subsystems above the physical layer of the receiving network device.

According to an aspect, a method is provided for controlling energy efficient operation of a receiving network device, comprising:
obtaining, from a transmitting network device, a code defining a wakeup state for a physical layer of the receiving network device, the wakeup state allowing a subsystem above the physical layer to enter a low power state without idling the entire physical layer; and
initiating the wakeup state for the physical layer in response to the transmitted code.

Advantageously, at least one sublayer of the physical layer is idled in response to the defined wakeup state.

Advantageously, the method further comprises:
obtaining a second code defining a second wakeup state for the physical layer of the receiving network device; and
transitioning from the first wakeup state to the second wakeup state in response to the second transmitted code.

Advantageously, the transmitting device sends refresh signaling corresponding to initiated wakeup state.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a graphical representation of network devices within an Ethernet network in accordance with various embodiments of the present disclosure.

FIG. 2 is a graphical representation of low power idle (LPI) signaling sent over the Ethernet link of FIG. 1 to implement Energy Efficient Ethernet (EEE) in accordance with various embodiments of the present disclosure.

FIG. 3 is a graphical representation of an example of the physical layer (PHY) of the network devices of FIG. 1 in accordance with various embodiments of the present disclosure.

FIG. 4 is a graphical representation of an example of a portion of an optical network including multiple optical network units in accordance with various embodiments of the present disclosure.

FIGS. 5 and 6 are flowcharts illustrating examples of controlling energy efficient operation of a receiving network device in accordance with various embodiments of the present disclosure.

### DETAILED DESCRIPTION

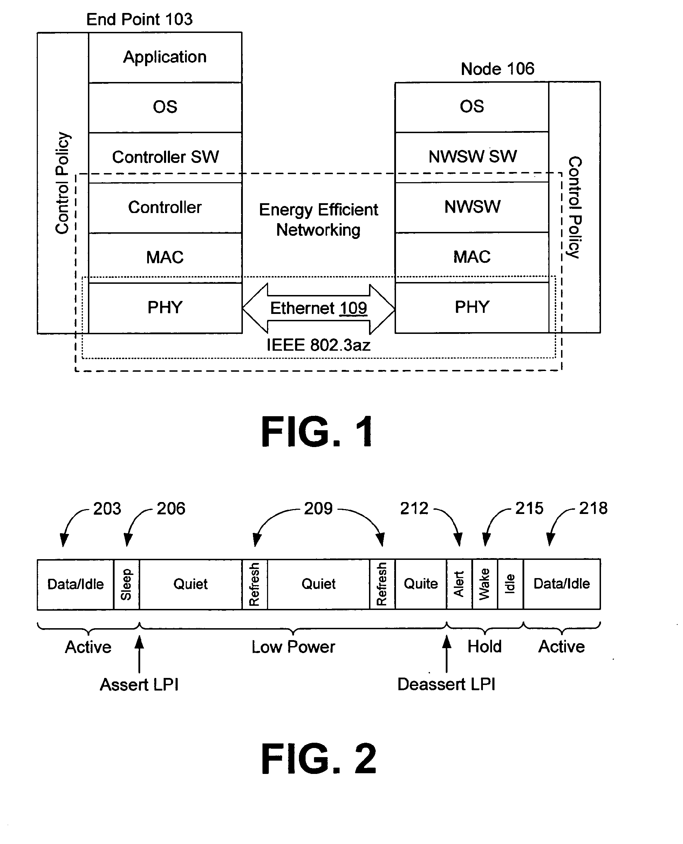

Referring to FIG. 1, shown is an example of an end point 103 such as, e.g., a server, controller, or client connected to a node 106 such as, e.g., a switch within a network. The devices 103 and 106 are connected through an Ethernet link 109. Each end point 103 and node 106 includes subsystems in an OSI-fashion beginning with the physical layer (PHY) at the bottom of the stack. The PHY provides an electrical, mechanical, and procedural interface to the transmission medium as well as other functionality such as the physical coding sublayer (PCS), physical medium attachment (PMA) sublayer, and physical medium dependent (PMD) sublayer. Energy efficient networking (EEN) may also be implemented by the PHY. The PHY may include, e.g., 100BASE-TX and 1000BASE-T layers as well as 10GBASE-T technology and backplane interfaces such as, e.g., 10GBASE-KR.

The end point 103 and node 106 may be configured to implement Energy Efficient Ethernet (EEE) over the Ethernet link 109 based upon the IEEE standard 802.3az or other energy efficiency standards for networked electronic and/or optical equipment. The energy efficiency associated with an energy efficiency standard such as EEE comes from both the savings on the actual interface (PMD) of the PHY and higher level subsystems that can take advantage of the lack of data transmission. When configured to implement EEE, the PMD interface enters a "sleep" mode in response to a low power idle (LPI) signal sent over the Ethernet link. The LPI provides for a lower energy consumption state that can be employed during periods of low link utilization (or high idle time). Control policies are used to define the EEE operation.

FIG. 2 illustrates an example of the LPI signaling that can be sent over the Ethernet link 109. After active data transmission 203 on the Ethernet link 109, an initial LPI signal 206 is sent to place the PHY into the sleep mode. Additional LPI signals 209 are sent at intervals to refresh the sleep mode. When activity is about to resume, a series of LPI signals are sent to alert 212 and wake 215 up the PMD interface before resuming active data transmissions 218 on the Ethernet link 109. It is not uncommon for a link and/or PHY to be idle for 90% or more of the time.

EEN may also allow for additional energy reduction by having higher level devices enter into an idle or sleep mode when the PMD interface is in the idle or sleep mode. As the control policies and architectures get more sophisticated, the energy savings in the layers above the PHY can become significantly larger than those from the PHY. However, in some cases where the energy savings are low, LPI may not be initiated in a PMD interface under the EEE control policies. In this case, higher level subsystems will also not be placed in an idle or sleep mode. In addition, many Ethernet interfaces are not configured to support EEE such as, e.g., an optical interface like 1000BASE-LX10 or a legacy Ethernet interface like 1-GBT with no EEE. The end points 103 and/or nodes 106 including these non-EEE interfaces are not able to take advantage of the potential energy savings.

However, additional savings may be achieved using signaling and encoding with a unit including a non-EEE PMU. Energy efficiency protocols may be encoded and sent over the Ethernet link to take advantage of EEE and/or other power management functions that are built in the higher level subsystems. The code set may be a set of predefined characters, code words, or other symbols including codes that allow for identification of operation levels or power modes, levels of activity, and/or periods of operation at the indicated level or mode for subsystems in a receiving network device. In this way, additional energy savings may be achieved by powering down or slowing down the subsystems without powering down the PMD interface in the receiving network device.

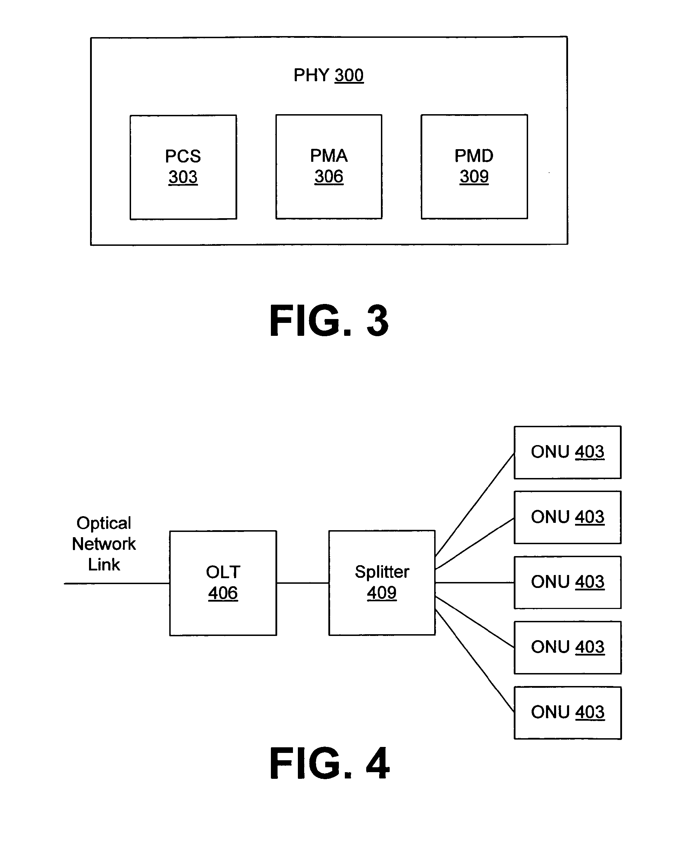

A quick example may help illustrate this point. A modular switch box may include a switch fabric that understands EEE and powers down subsystems or slows itself down when a port is in an EEE mode. For example, a line card that has a 10GBT EEE enabled PHY will allow the switch to do that. Different wakeup states may be implemented in the PHY to achieve different levels of operation, wakeup times, and energy efficiencies when in the sleep mode. For example, physical layer signaling (e.g., LPI signaling) or code sets (e.g., characters, code words, or symbols) may be used to provide an indication that allows for different wakeup times by idling different combinations of sublayers within the PHY. As illustrated in FIG. 3, the PHY 300 may include multiple sublayers such as, e.g., the PCS 303, PMA 306, and PMD 309. The appropriate wakeup indication may initiate one of the wakeup states when initiating EEE operation of the PHY. For instance, based upon the signaling or code word, the PHY 300 may enter a traditional (or regular) wakeup state that idles all sublayers, a quick wakeup state where the PMA 306 and PMD 309 are idled (or turned off) while the PCS 303 remains active to reduce the wakeup time, or an instant wakeup (or no-sleep) state where all of the PHY sublayers remain active to minimize or eliminate the wakeup time. Other wakeup states may also be available based upon the sublayers of the PHY 300. Appropriate EEE signaling (on non-EEE signaling) may then be sent to the media access control (MAC) layer (FIG. 1) indicating that the PHY has entered the sleep mode, which allows the higher level devices to enter idle or sleep modes.

If the PHY receives signaling that indicates initiation of the sleep mode without indicating the wakeup state, the level of operation may default to a predefined wakeup state. For example, the PHY may automatically default to a predefined wakeup state such as, e.g., the traditional (or regular) wakeup state with the longest wakeup time or the instant wakeup (or no-sleep) state with the shortest wakeup time. In some embodiments, the PHY may be configured to change (or transition) to another wakeup state if no further communication is received during a predefined time period after receiving the initial sleep mode signaling. For instance, the PHY may automatically change from the instant wakeup (or no-sleep) state to a reduced wakeup state (e.g., a quick or traditional wakeup state) if no communication was received by the PHY within a predefined period (e.g., 10ms) after the sleep mode was initiated. In some cases, the wakeup state may be reduced in an incremental fashion.

In another embodiment, the predefined wakeup state may be determined through apriori negotation between the transmitting and receiving devices. The negotiation may be carried out automatically when the link between the network devices is initially established. The negotiation may also be carried out dynamically through a higher layer protocol such as, e.g., link layer discovery protocol (LLDP). In this way, it may be determined that if sleep mode signaling is received by the PHY, then the PHY will transition to the agreed upon wakeup state without the need for further indications.

In other embodiments, the PHY may be configured to change to another wakeup state in response to additional signaling received when the PHY is in a sleep mode. After a sleep mode has been initiated in a first wakeup state, additional signaling may be sent to the PHY to change the wakeup state. For example, LPI signaling may include an indication that initiates transition of the PHY to a specific wakeup state specified by the signaling. In some cases, the signaling may indicate a time delay before transition to the specified wakeup state. In other implementations, the LPI signaling may include an indication that initiates an incremental transition of the wakeup state to increase or decrease the wakeup time. In this fashion, the wakeup state may be sequenced based upon communication traffic and/or signaling from a transmitting device. In some implementations, the PHY may provide signaling to the transmitting device that indicates which wakeup state is implemented by the PHY.

When operating in one of the non-traditional wakeup states, the frequency and/or content of the refresh signals (e.g., 209 of FIG. 2) may be changed based upon the wakeup state of the PHY. For example, the refresh signals may need to be transmitted at a different frequency (or period) when in a quick wakeup state where only a portion of the PHY is idle than when the PHY is operating in the traditional (or regular) wakeup state. In other cases, the signaling may need a higher content to maintain the error rate at a desired level.

In other implementations, the signaling may include an indication that slows down the rate of the PHY layer. For example, the signaling may reduce the operation from a 10 GB rate to a 1 GB rate to reduce power consumption. The change in rate may be specified as part of the signaling or may be a predefined change that is initiated by the indication. Signaling or code sets would also be provided from the PHY to the MAC over a media independent interface (MII) to initiate a corresponding reduction in rate of the switch.

If the line card is replaced with an optical card, that EEE capability may be lost. However, if the EEE states were encoded, then the optical card can take advantage of the energy savings without requiring the PHY to power down. The code set enables the modular switch box to tell the optical card to go into a low power state of no activity or reduced activity such as a lower (or sub) rate. The signaling or code set may also indicate whether the PHY layer should enter an LPI mode or a subrating mode. Signaling or codes would also be sent to the MAC over the MII to indicate that the PHY is either entering the sleep mode or the subrating mode. This may be extended to include legacy devices or interfaces (e.g., optical interfaces) that do not support EEE but have subsystems that include power management features. In addition, this may be extended to other networks such as, e.g., wireless networks.

If a transmitting network device is powering down, the transmitting network device may send codes (e.g., code words or symbols including codes) to one or more receiving network device(s) over the Ethernet network. The codes may be passed over the medium or network link via runt packets, idle patterns of specific combinations, code words, substitution of an idle character with a code word, modulating the idle patterns, encoded in inner packet gap, physical layer signaling, modification of an existing code set, etc. The codes can define the activity level of the receiving network device and/or the link activity between the transmitting and the receiving network devices. For example, the code may indicate that the Ethernet link will enter a low power state and can include the operational level such as, e.g., no activity (0% rate) or a low rate such as, e.g., 75%, 50%, or 30% of the transmitter rate or bandwidth. In some implementations, the code may indicate a limit or range of rates. In other implementations, a plurality of operational levels corresponding to different time periods may be indicated. The code may also indicate the period or duration of operation in the low power state or in a wakeup state. The period may be a predefined interval or may be an interval that is determined by the transmitting network device based upon the detected and/or anticipated transmission activity. In other implementations, the code may indicate a time when the receiving network device restores operation from the low power state or transitions from the wakeup state. In some cases, a code may be sent by the transmitting network device to restore the receiving network device from the low power state to normal operations or to adjust the operational level of the receiving network device. This may include changing the wakeup state of the PHY and/or the operational mode of higher level subsystems. If the receiving network device is in a mode of no activity, the receiving network device may periodically check for codes from the transmitting network device to determine if a change in operational level is needed.

If the transmitting network device is operating through a point-to-point link, then the code may be sent across link to suspend or slow down activity without a reduction in physical layer activity. If the transmitting network device is operating through point-to-multipoint links, then the code may include an identification sequence to designate the corresponding receiving network device or group of network devices. For example, a transmitting network device may be configured to send data to a plurality of receivers. If the transmitting network device determines that data will not be sent to a subgroup of one or more of the receivers for a period of time, the receiver may send codes to each of the subgroup to enter a low power state for at least a portion of the period of time. In this case, the codes include the indication to enter the reduced power state, the period the low power state is maintained, and an identification sequence to designate the appropriate receivers in the subgroup. FIG. 4 illustrates an example of a portion of an optical network including multiple optical network units (ONUs) 403. Communications are received over the optical network at an optical line termination (OLT) 406 and sent to a splitter 409 that distributes the signals to appropriate ONUs 403. In this way, ONUs 403 may be configured in groups that may operate in the same or different sleep modes. An identification sequence (e.g., a logical link identifier, LLID) may be used to specify the operation of one or more ONU(S) 403 in communication with the OLT 406. The identification sequence may correspond to a single receiving network device or a group of network devices (e.g., receiving network devices of the same type and/or model) independent of network topology. For example, the device(s) may be specified by internet protocol (IP) address(es) or MAC address(es). The code may also include a level of activity that will be maintained during the low power state. In some implementations, the code may indicate a limit or range of rates to accommodate the operations of each of the group of network devices. In other embodiments, signaling or code set may be sent to a PHY that indicates that that PHY (and MAC) should ignore any EEE signaling that is received during a defined time period.

In some implementations, the transmitting network device may initially determine if a receiving network device includes subsystems above the physical layer that support either EEE or non-EEE power management features. For example, a handshake sequence (e.g., a standardized or vendor specific auto-negotiation or other appropriate signaling sequence) may be carried out to determine the network device capabilities. In this way, the codes transmitted to the receiving network device may be appropriately defined to implement the energy savings. An identification sequence may also be assigned to the receiving network device based upon the availability of power management features.

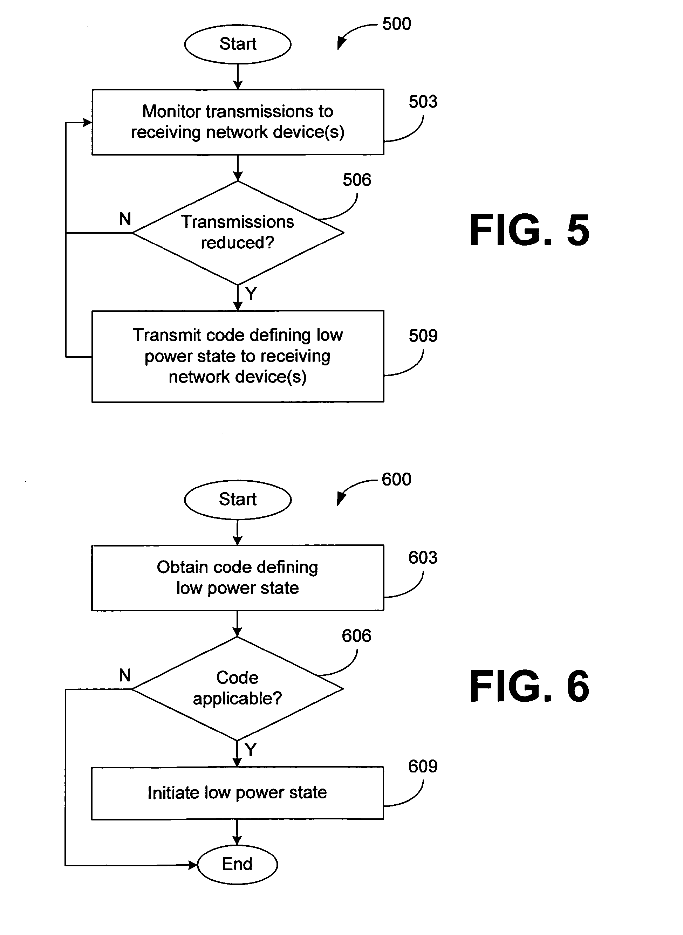

Referring now to FIG. 5, shown is a flowchart 500 illustrating an example of controlling energy efficient operation of a receiving network device. Beginning with block 503, transmissions from a transmitting network device to one or more receiving network device(s) are monitored. In block 506, it is determined if transmissions to the receiving network device(s) will be reduced for a period of time. In some implementations, the determination is based upon a minimum period of time associated with a reduced transmission level. If the transmissions are not reduced, then transmission monitoring continues in block 503. If the transmission is at a reduced level, then a code (or signaling) may be transmitted to the receiving network device(s) in block 509. The transmitted code defines a low power state for one or more subsystem(s) above the physical layer of the receiving network device. The low power state may be an Energy Efficient Ethernet (EEE) or non-EEE power management function implemented by the subsystem of the receiving network device. The transmitted code may also identify a wakeup state for the PHY or additional signaling or codes may be transmitted to identify the wakeup state for the PHY. After sending the code in block 509, monitoring of transmissions continues in block 503.

The low power state may be implemented to improve energy efficiency of the receiving network device without a reduction in physical layer activity. For example, the low power state may be a sleep mode with no activity or a level of activity that is lower than a normal bandwidth. In some cases, a portion of the PYH sublayers may be idled in accordance with an indicated wakeup state to reduce power consumption while providing a reduced wakeup time for the network device. The transmitted code may also define a period of time to maintain the low power state, which may be a predefined period of time or may be determined by the transmitting network device based upon the period of time that transmissions to the receiving network device will be reduced. The transmitted code may also include an identification sequence identifying a corresponding receiving network device or a group of receiving network devices.

Referring next to FIG. 6, shown is another flowchart 600 illustrating an example of controlling energy efficient operation of the receiving network device. Beginning with block 603, a code (or signaling) defining a low power state for a subsystem above the physical layer of the receiving network device without a reduction in physical layer activity is obtained from a transmitting network device. In block 606, it is determined if the code is applicable to the receiving network device. This may be determined based upon the code corresponding to an EEE or non-EEE power management function implemented by one or more subsystem(s) of the receiving network device. In other cases, the transmitted code may include an identification sequence identifying the receiving network device. If the code applies, then the low power state is initiated in block 609 in response to the transmitted code. In some cases, code or signaling indicates a wakeup state of the PHY of the receiving network device.

The low power state may be implemented to improve energy efficiency of the receiving network device without a reduction in physical layer activity. For example, the low power state may be a sleep mode with no activity or a level of activity that is lower than a normal bandwidth that may be applied to one or more subsystems of the receiving network device without a reduction in physical layer activity. In some cases, a portion of the PYH sublayers may be idled in accordance with an indicated wakeup state to reduce power consumption while providing a reduced wakeup time for the network device. The transmitted code may also define a period of time to maintain the low power state for the subsystem(s). At the end of the defined period of time, the subsystem(s) would return to normal operation unless another code has been obtained.

It should be emphasized that the above-described embodiments of the present invention are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of this disclosure and the present invention and protected by the following claims.

Therefore, having thus described the invention, at least the following is claimed:

## Claims

1. A method for controlling energy efficient operation of a receiving network device, comprising:
determining that transmissions to the receiving network device will be reduced for a period of time; and
transmitting a code to the receiving network device over a network link, the code defining a low power state for a subsystem above a physical layer of the receiving network device without a reduction in physical layer activity.

2. The method of claim 1, wherein the network link is an Ethernet link.

3. The method of claim 1, wherein the low power state is an Energy Efficient Ethernet (EEE) power management function implemented by the subsystem.

4. The method of claim 1, wherein the low power state is a non-EEE power management function implemented by the subsystem.

5. The method of claim 1, wherein the code defines a level of activity for the low power state.

6. The method of claim 5, wherein the level of activity is lower than a normal bandwidth.

7. The method of claim 1, wherein the code defines a period of time to maintain the low power state.

8. The method of claim 7, wherein the period of time to maintain the low power state is a predefined period of time.

9. The method of claim 7, wherein the period of time to maintain the low power state is based upon the period of time that transmissions to the receiving network device will be reduced.

10. The method of claim 1, further comprising:
determining that transmissions to a plurality of receiving network devices will be reduced for at least a portion of the period of time; and
transmitting code to the each of the plurality of receiving network devices, the code defining a low power state for a subsystem above the physical layer of the receiving network device without a reduction in physical layer activity, wherein the code includes an identification sequence identifying a corresponding one of the plurality of receiving network devices.

11. The method of claim 10, wherein the identification sequence identifies a subgroup of the plurality of receiving network devices.

12. A method for controlling energy efficient operation of a receiving network device, comprising:
obtaining, from a transmitting network device, a code defining a low power state for a subsystem above a physical layer of the receiving network device without a reduction in physical layer activity; and
initiating the low power state for the subsystem in response to the transmitted code.

13. The method of claim 12, wherein the network link is an Ethernet link.

14. The method of claim 12, wherein the low power state is a sleep mode with no activity.

15. A method for controlling energy efficient operation of a receiving network device, comprising:
obtaining, from a transmitting network device, a code defining a wakeup state for a physical layer of the receiving network device, the wakeup state allowing a subsystem above the physical layer to enter a low power state without idling the entire physical layer; and
initiating the wakeup state for the physical layer in response to the transmitted code.
